# EUROPÄISCHE PATENTSCHRIFT

(11) **EP 0 941 907 B1**
(45) Veröffentlichungstag und Bekanntmachung des Hinweises auf die Patenterteilung: **22.01.2003**
(21) Anmeldenummer: 97122016.5
(22) Anmeldetag: 13.12.1997
(51) Int. Cl.: B61D 19/00, B61D 39/00, B60J 5/04

(54) **Güterzugwagen, insbesondere für den Transport von Schüttgütern**
Freight wagon especially for the transport of bulk material
Wagon à marchandises notamment pour le transport des produits en vrac

(43) Veröffentlichungstag der Anmeldung: 15.09.1999
(73) Patentinhaber: Railtrans S.A., 78810 Feucherolles (FR)
(72) Erfinder: Jost, Dieter, 78810 Feucherolles (FR)
(74) Vertreter: Stenger, Watzke & Ring Patentanwälte

(56) Entgegenhaltungen:
- DE-A- 1 530 076
- DE-A- 2 007 268
- DE-A- 4 006 532
- US-A- 2 877 722

## Beschreibung

Die Erfindung betrifft einen Güterzugwagen mit den Merkmalen des Oberbegriffs des Anspruchs 1. Ein derartiger Güterzugwagen ist bespielsweise aus der DE-OS-2 007 268 bekannt.

Güterzugwagen dienen dem Transport von Gütern auf Schienen und haben vielfältige Anforderungen aufgrund der verschiedenartigen zu transportierenden Güter zu erfüllen. Grundsätzlich besteht das Bestreben, einen möglichst großen Transportbereich mit einer möglichst geringen Zahl von unterschiedlichen Güterzugwagen zu bewältigen. Insbesondere stellt sich in diesem Zusammenhang die Aufgabe, in einem einzigen Güterzugwagen einerseits Rohprodukte, wie beispielsweise Holzspäne als Ausgangsstoffe für die Herstellung von Spanplatten, Parkettplatten und dgl. Holz-Fertigprodukte in die Verarbeitungswerke hinein zu transportieren und anschließend nach der Entladung in einfacher Weise Fertigprodukte, im konkreten Fall also beispielsweise in den gleichen Wagen Holzplatten zu laden und zum Endabnehmer zu transportieren, wobei es insbesondere darauf ankommt, den Belade- und Entladevorgang in kürzester Zeit durchzuführen und während des Transports im Güterzugwagen sicherzustellen, daß die empfindlichen Rohprodukte und Fertigwaren nicht beschädigt werden. Ein grundsätzliches Ziel des Güterverkehrs besteht darin, eine Verkürzung der Umschlagzeiten durch Spezialwaggons für die verschiedenen Waren und besondere Be- und Entladeeinrichtungen zu erreichen.

Im allgemeinen besteht jeder Güterzugwagen im wesentlichen aus einem mindestens zweiachsigen Laufwerk, einem Untergestell mit Bremsanlage und Zugund Stoßeinrichtung und dem entweder fest (verschraubt, vernietet oder verschweißt) oder beweglich (kipp- oder schwenkbar) mit letzterem verbundenen kasten- oder gefäßartigen Aufbau. Dabei ist das Untergestell der eigentliche, wesentliche Tragkörper zur Aufnahme der senkrechten Belastung, der Puffer- und Zughakenkräfte und der aus dem Lauf herrührenden senkrechten und seitlichen Massenkräfte. Dagegen richtet sich die Konstruktion des Aufbaus im wesentlichen nach den Anforderungen, die das Ladegut nach Quantität und Qualität stellt sowie den Bedingungen zur Be- und Entladung. Abgesehen von Ladegefäßaufbauten oder Trichterwagen weisen Güterzugwagen in der Regel einen Kastenaufbau mit einem Aufbaugerippe aus Walzprofilen auf, die ein Rahmenwerk mit Seitenwandpfosten und diese verbindenden oberen Längsträgern bilden. Dabei können die Wagen oben offen oder gedeckt oder mit einem öffnungsfähigen Dach verschlossen sein und Öffnungen zum Be- und Entladen aufweisen. Offene Güterzugwagen erlauben den Zugang zum Laderaum von oben, während Wagen mit fester Deckung auf Seitenwand-Schiebetüren oder den lichten Kastenquerschnitt freigebenden Stimwandflügeltüren zum stimseitigen Beladen und Entladen angewiesen sind.

Insbesondere beim Transport von Schüttgütern oder körnigen Produkten in loser Schüttung, wie z. B. Holz- und Sägespänen, die in der Papierindustrie oder zur Herstellung von Holzplatten verwendet werden, ist nachteilig, daß zum Be- und Entladen nur relativ kleine Öffnungen entweder durch die Stirnwandflügeltüren oder durch Seitenwand-Schiebetüren zur Verfügung stehen und daß zur Öffnung und zum Schließen große Kräfte ggf. gegen Widerstände der Ladung aufgebracht werden müssen.

Aus der DE-A-40 06 532 ist eine Ladepritsche für Fahrzeuge mit wenigstens einer öffenbaren Seitenwand, die durch eine erste nach unten und eine zweite nach oben schwenkbare Klappe gebildet ist, bekannt. An der unteren Klappe soll mit Abstand zu deren Schwenkachse eine druckfeste Zugstange angelenkt sein, die mit ihrem der Klappe abgewandten Ende an dem Ende eines Armes eines zweiarmigen Hebels schwenkbar befestigt ist, dessen zweiter Arm an der oberen Klappe angreift. Nachteiligerweise ist damit ein Getriebeantrieb geschaffen, der sehr kompliziert ist und leicht zu Verkantungen und Beschädigungen neigt. Die Öffnungsbewegung der unteren Klappe wird zwangsläufig auf die obere Klappe übertragen, die durch den zweiarmigen Hebel beim Abwärtsschwenken der unteren Klappe nach oben bewegt wird. Die Verwendung des Hebelgetriebes ist insgesamt technisch anfällig.

Der Erfindung liegt in Anbetracht dieses Standes der Technik die **Aufgabe** zugrunde, einen Güterzugwagen der eingangs genannten Art unter Meidung der beschriebenen Nachteile derart zu verbessern, daß eine wahlweise Beladung oder Entladung von oben und von der Seite her jeweils über den gesamten Dach- oder Seitenwandbereich ermöglicht ist, wobei das Öffnen bzw. Schließen der Beund/oder Entladeöffnung in einfacher Weise ohne nennenswerten Kraftaufwand quasi selbsttätig von Hand durchführbar sein soll.

Erfindungsgemäß wird diese Aufgabe bei einem Güterzugwagen mit den Merkmalen des Oberbegriffs des Anspruchs 1 durch die Merkmale des kennzeichnenden Teils des Anspruchs 1 **gelöst**.

Dadurch, daß die Öffnung sich über den gesamten Seitenwandbereich erstreckt und von zwei korrespondierenden durchgehend zu öffnenden Klapptüren verschlossen ist, deren eine, die untere Hälfte des Seitenwandbereichs einnehmende Klapptür am Untergestell, und deren andere, die obere Hälfte des Seitenwandbereichs einnehmende Klapptür in gleicher Vertikalebene an dem oberen Längsträger oder oberen Teil des Rahmenwerks angelenkt ist, wobei bezüglich der aufzubringenden Schwenkkräfte (Öffnungs- und Schließkräfte) eine ausbalancierte gekoppelte Kinetik beider Türgewichte miteinander vorgesehen ist derart, daß die Schwenkkräfte nahezu ausgeglichen sind, und dadurch, daß die untere Klapptür eine geringere Höhe und damit ein geringeres Gewicht als die obere Klapptür besitzt und als Kopplungseinrichtung zumindest an einer der beiden Seiten der Klapptüren eine 8-förmig gelegte Kette als Kettentrieb vorgesehen ist, die mit den Schwenkwellen der Klapptüren über daran befestigte Kettenräder verbunden ist, ist in einfacher Weise erreicht, daß ein quasi selbsttätig-automatisches Öffnen und Schließen der Klapptüren erfolgt, nachdem eine Sicherungseinrichtung gelöst ist und der Benutzer durch einen geringen Zug an einem Hebel die anfänglichen Reibungskräfte der ausbalancierten gekoppelten Kinetik beider Türgewichte überwunden hat. Es steht dann der gesamte Seitenwandbereich zur Be- oder Entladung des Güterzugwagens mit bzw. von dem Ladegut bei nach unten bzw. oben weggeklappten Türen zur Verfügung.

Da die Klapptüren bei sehr langen Güterzugwagen eine erhebliche Länge aufweisen können, wird in zweckmäßiger Ausgestaltung der Erfindung vorgeschlagen, die Klapptüren mittig durch eine Mittenhalterung zusätzlich zu halten. Ferner ist es vorteilhaft, die untere Klapptür unterhalb des Bodens des Aufbaus anzulenken, um durch die Seitenöffnung des Aufbaus den Boden als ebene Ladefläche direkt zugänglich zu machen, ohne daß Scharniere, Achsen, Wellen oder dgl. Anlenkeinrichtungen der unteren Klapptür den Zugang oder die Entladung behindern. Die obere Klapptür kann mit Vorteil durch einen Anschlag in Öffnungsstellung in im wesentlichen senkrechter Position gehalten sein, um die initialen Schließkräfte zu verringern.

Für den Transport von empfindlichen Gütern, beispielsweise nässeempfindlichen Holzspänen oder Holz-Fertigprodukten, ist es gemäß einer Ausgestaltung der Erfindung vorteilhaft, die Klapptüren gegeneinander und gegenüber angrenzenden Teilen des Aufbaus mit Dichtungen abzudichten sowie eine Abdeckung des Aufbaus insbesondere durch eine feste Dachbedeckung vorzusehen, die als Schwenkabdeckung ausgebildet ist. Hiermit ist die Möglichkeit gegeben, den Laderaum hermetisch, vor allem wasserdicht, zu verschließen und dennoch den Belade- und Entladevorgang durch Wegklappen der Klapptüren und Aufschwenken der Dachbedeckung einfach und in kürzester Zeit durchzuführen. Hierbei kann ergänzend als Entladeeinrichtung ein Airbag vorgesehen sein, der aus einer auf dem Boden des Aufbaus aufliegenden aufblasbaren Unterlage in Form eines dichten Beutels oder Balgs besteht, der in aufgeblasenem Zustand den Rauminhalt des Laderaums einnimmt. Schüttgüter können auf diese Weise auf der Unterlage liegend transportiert werden und durch Aufblasen des Airbags in kürzester Zeit vollständig aus dem Güterzugwagen aktiv ausgeschoben werden, insbesondere wenn gemäß einer bevorzugten Ausführungsform des Airbags der Beutel oder der Balg in luftleerem Zustand den Boden des Aufbaus bedeckt und eine sich im wesentlichen über die gesamte Höhe erstreckende Wand gegenüber der Entladeöffnung bildet.

Zur weiteren Beschleunigung des Beladens und Entladens kann vorgesehen sein, beide Längsseitenwände mit korrespondierenden, durchgehend zu öffnenden Klapptüren verschlossen auszubilden. Bei längeren Güterzugwagen kann es darüber hinaus vorteilhaft sein, auf halber Länge eine Unterteilung durch eine Quertrennwand vorzusehen und insgesamt vier Klapptüren auf einer oder beiden Längswandseiten jeweils anzuordnen. Hiermit wird auch die Möglichkeit vergrößert, unterschiedliches Ladegut zu transportieren.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform eines erfindungsgemäßen Güterzugwagens schematisch dargestellt ist. In der Zeichnung zeigt:
- Fig. 1: einen Eisenbahnwaggon mit vier geschlossenen Klapp-Seitentüren in schematischer Seitenansicht,
- Fig. 2: den Eisenbahnwaggon der Fig. 1 mit geöffneten Klapptüren,
- Fig. 3: eine Stirnwandansicht auf den Eisenbahnwaggon der Fig. 1 und 2 mit einem Kettentrieb zur Klapptür-Betätigung, teilweise unter Weglassung von Gehäuseabdeckungen,
- Fig. 4: den Kettentrieb der Fig. 3 in vergrößerter Darstellung,
- Fig. 5: eine vergrößerte Seitenansicht der Klapptüren, schematisch,
- Fig. 6: eine vergrößerte Draufsicht auf die Klapptüren der Fig. 5, schematisch,
- Fig. 7: eine Stirnwandansicht eines Eisenbahnwaggons mit wegschwenkbarer Dachbedeckung, schematisch und darunter angeordneter Draufsicht,
- Fig. 8: eine geänderte Ausgestaltung einer Schwenkabdeckung in schematischer Stirnwand-Teilansicht gemäß Fig. 8a in geschlossenem Zustand der Dachbedeckung und gemäß Fig. 8b in geöffnetem Zustand,
- Fig. 9: eine Stirnwandansicht eines Eisenbahnwaggons mit einer als Schwenkabdeckung ausgebildeten festen Dachbedeckung gemäß Fig. 9a in geschlossenem Zustand und gemäß Fig. 9b in geöffnetem Zustand und
- Fig. 10: einen Güterzugwagen mit Airbag in schematischer Querschnittsansicht.

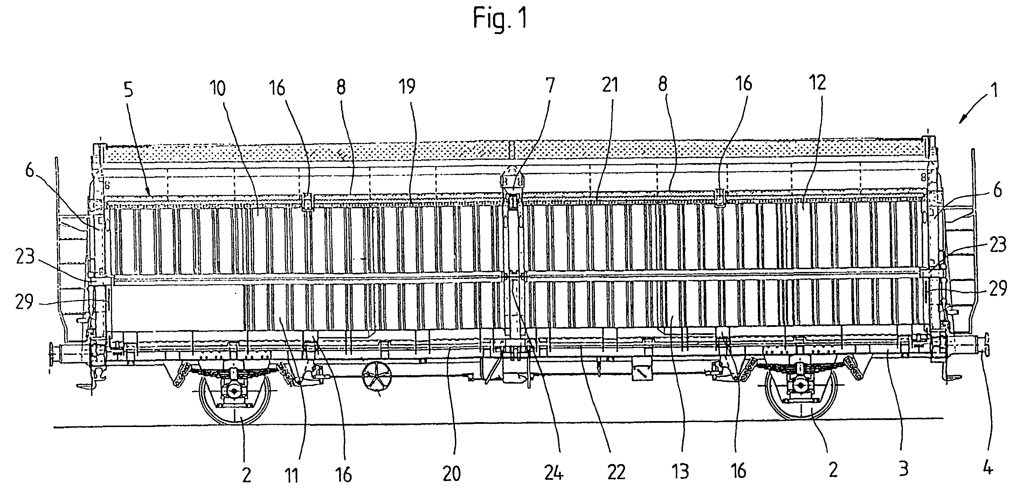

Der in Fig. 1 dargestellte Güterzugwagen 1 stellt einen Waggon einer kurzgekoppelten Wageneinheit dar. Er weist ein zweiachsiges Laufwerk 2 auf, welches in nicht im einzelnen beschriebener bekannter Weise mit einem Untergestell 3 verbunden ist, welches aus einem etwa in Höhe der Puffer 4 angeordneten geschweißten Profilrahmen besteht, der die senkrechten Belastungen, die Pufferkräfte und Zughakenkräfte und die aus dem Lauf herrührenden senkrechten und seitlichen Massenkräfte aufnimmt. Das Untergestell 3 trägt einen kastenförmigen Aufbau 5 aus einem Rahmenwerk mit Stirnseitenwänden 6, Seitenwandpfosten 7 und diese verbindenden oberen Längsträger 8, wobei ein Aufbau-Boden 9 auf dem Untergestell 3 aufliegt und der Aufnahme der Ladung dient. Da die Stirnseitenwände 6 geschlossen sind, ist zur Be- und Entladung vorgesehen, eine Be- und EntladeÖffnung auszubilden, indem der gesamte Seitenwandbereich zu öffnen ist, wobei zusätzlich noch eine schließbare Dachöffnung vorgesehen sein kann.

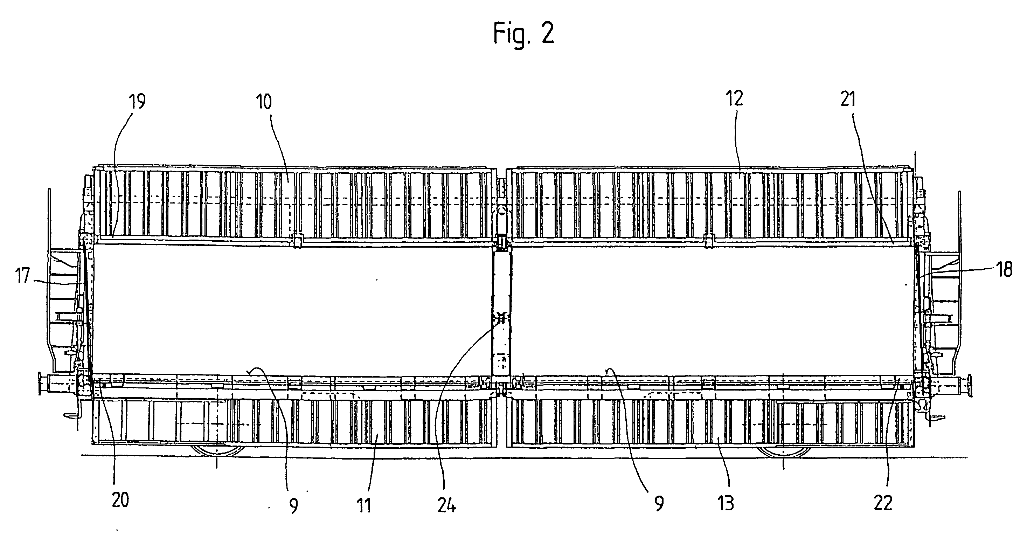

Die Öffnung des Seitenwandbereichs erfolgt bei dem Güterzugwagen 1 durch die Maßnahme, daß die Seitenwände von mindestens zwei, in dem in der Zeichnung dargestellten Ausführungsbeispiel von vier durchgehend zu öffnenden Klapptüren 10, 11, 12 und 13 gebildet sind, und zwar auf jeder Seite des Güterzugwagens 1. Dieser ist daher mit insgesamt acht Klapptüren ausgerüstet, die in Schließstellung in Fig. 1 der Zeichnung und in Öffnungsstellung in Fig. 2 der Zeichnung schematisch dargestellt sind. Jede untere Klapptür 11 bzw. 13 erstreckt sich in Längsrichtung mit einer Höhe, die etwas geringer als die Hälfte der Höhe des Seitenwandbereichs des Aufbaus 5 ist und ist entweder direkt auf der Ebene der Entladekante des Bodens 9 oder im dargestellten Ausführungsbeispiel unterhalb des Bodens 9 um eine Achse 14 schwenkbar angeordnet. Über jeder unteren Klappe 11 bzw. 13 ist in der gleichen Vertikalebene die zugehörige obere Klappe 10 bzw. 12 angeordnet, die mit der unteren Klappe korrespondiert und die gemeinsam die Längsseitenwand des Güterzugwagens 1 bilden. Die oberen Klappen 10 bzw. 12 erstrecken sich in Längsrichtung über die obere Hälfte des Fahrzeugaufbaus und sind um eine Achse 15 nach oben schwenkbar angeordnet, die auf der Ebene des oberen Längsträgers 8 des Güterzugwagens 1 angeordnet ist.

Auf jeder Längsseitenwand sind im beschriebenen Ausführungsbeispiel vier Klapptüren der beschriebenen Art vorgesehen, um eine einfache und variable Be- und Entladung nach beiden Seiten auch an einem sehr langen Fahrzeug von mehr als 12 m Länge vornehmen zu können, wozu die Seitenwandpfosten 7 zur Halterung und Aufhängung der Klapptüren in der Mitte des Wagens ausgestaltet sind. Dabei können die Klapptüren 10, 11, 12 und 13 zusätzlich in ihrer Mitte durch je eine Mittenhalterung 16 am Untergestell 3 bzw. Aufbau 5 gehalten sein.

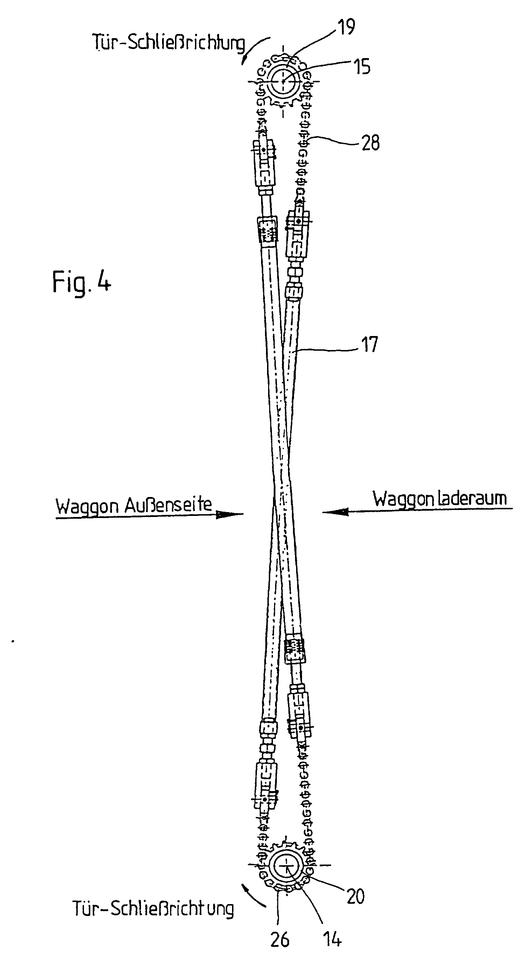

Um ein leichtes, paarweises Öffnen und Schließen der Klapptüren 10 und 11 bzw. 12 und 13 zu gewährleisten, ist ein Abgleich beider Türgewichte über eine ausbalancierte gekoppelte Kinetik der Klapptürpaare miteinander vorgesehen derart, daß die Schwenkkräfte nahezu ausgeglichen sind. Zu diesem Zweck weist die untere Klapptür 11 bzw. 13 eine geringere Höhe und ein geringeres Gewicht als die zugehörige obere Klapptür 10 bzw. 12 auf und ist als Kupplungseinrichtung zumindest an einer der beiden Seiten der Klapptüren 10, 11 bzw. 12, 13 eine 8-förmig gelegte Kette 17 bzw. 18 als Kettentrieb vorgesehen, die mit Schwenkwellen 19, 20 bzw. 21, 22 der Klapptüren 10, 11 bzw. 12, 13 über daran befestigte Kettenräder verbunden sind. Es sei angemerkt, daß anstelle eines Kettentriebs auch eine andere Kopplungseinrichtung, beispielsweise ein Riementrieb, Verwendung finden könnte. Wesentlich ist die erzielte Bewegungsumkehr durch die 8-förmige Anordnung, die durch die die Schließrichtung der Türen verdeutlichenden Pfeile in Fig. 4 der Zeichnung angezeigt ist sowie die kinetische und gewichtsmäßige Ausbalancierung derart, daß das Öffnen bzw. das Schließen der Klapptüren mit geringstem Kraftaufwand quasi selbsttätig von Hand durchführbar ist.

Die Klapptüren 10, 11 bzw. 12, 13 sind in ihrer Schließstellung durch eine manuell lösbare Verriegelung arretiert. Hierzu ist an jeder Stirnseitenwand 6 ein Schwenkriegel 23 angelenkt, der sich außen über die Klapptüren 10, 11 bzw. 12, 13 verschwenken und arretieren läßt, so daß sich in dieser Position des Schwenkriegels die Klapptüren nicht öffnen lassen. Als weitere Sicherheitseinrichtung sind mittig am Seitenwandpfosten 7 Schieberiegel 24 angeordnet, die benutzt werden können, die Klapptüren 10, 11 bzw. 12, 13 in Schließstellung gegen eine Öffnung zu verriegeln. Erst nach einer Handentriegelung kann die Türbetätigung vorgenommen werden.

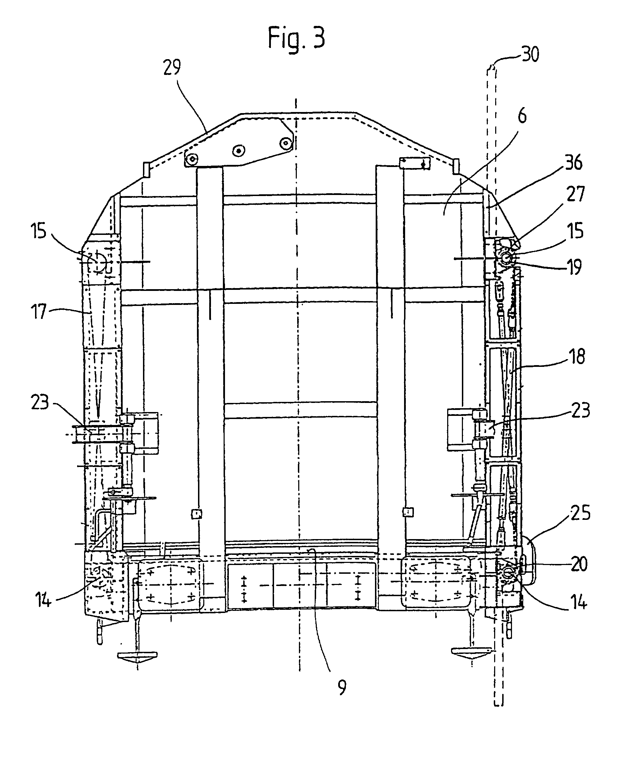

Die Ansichten der Fig. 3 und 4 verdeutlichen den Aufbau der Betätigung der Klapptüren dadurch, daß das Gehäuse des Kettentriebs rechts in Fig. 3 der Zeichnung an der Seitenwand 6 teilweise weggelassen ist, so daß die Anordnung des in Fig. 4 der Zeichnung vergrößert dargestellten Kettentriebs am Waggon erkennbar wird. Demnach ist jede untere Klapptür 11 bzw. 13 unterhalb des Bodens 9 über U-förmige Befestigungskonsolen 25 fest mit der zugehörigen Schwenkwelle 20 bzw. 21 verbunden, auf der seitenwandseitig ein Kettenrad 26 befestigt ist. Die Schwenkwelle 20 erstreckt sich über die halbe Wagenlänge bis zum mittleren Seitenwandpfosten 7. Sie ist daher insgesamt dreifach gelagert, nämlich an der Seitenwand 6, in der Mittenhalterung 16 und am Seitenwandpfosten 7.

In äquivalenter Weise ist die jeweils obere Klapptür 10 bzw. 12 auf einer Schwenkwelle 19 bzw. 21 befestigt, die dreifach gelagert ist und im Bereich der Stirnseitenwand 6 mit einem Kettenrad 27 versehen ist. Gemäß Fig. 4 der Zeichnung verläuft 8-förmig gelegt über die Kettenräder 26 und 27 eine Kette 28, mit Spanneinrichtungen, die für die Kopplung der Türen und deren Bewegung verantwortlich ist. Die Kette 28 stellt generell ein biegsames Zugelement, wie auch ein Seil oder ein Riemen oder ein Zahnriemen, dar, welches ohne Feder arbeitet und die Öffnungs- und Schließbewegung der einander zugeordneten Klapptüren 10, 11 bzw. 12, 13 koordiniert. Kraftspeicher ist dabei das ausbalancierte Gewicht der Klapptürpaare. Hierdurch wird erreicht, daß mit einem einfachen Zug an einem Betätigungshebel nach Entriegelung der Klapptüren deren Öffnung ohne weiteren Kraftaufwand, d. h. quasi-selbstätig erfolgt und die untere Klapptür 11 bzw. 13 unter den Wagenboden 9 verschwenkt wird, während die zugehörige obere Klapptür 10 bzw. 12 in eine senkrechte Position nach oben verschwenkt wird. Der gesamte Laderaum ist damit zum Be- und Entladen über die vollständig geöffnete Seitenwand des Güterzugwagens 1 zugänglich. Zum Schließen ist wiederum nur ein geringerer Zug zur Überwindung der Reibungskräfte z. B. an der unteren Klapptür erforderlich und findet sodann ohne weiteren Kraftaufwand der Schließvorgang der Klapptüren von alleine statt. Hiernach können die Sicherheitseinrichtungen zur Verriegelung betätigt werden.

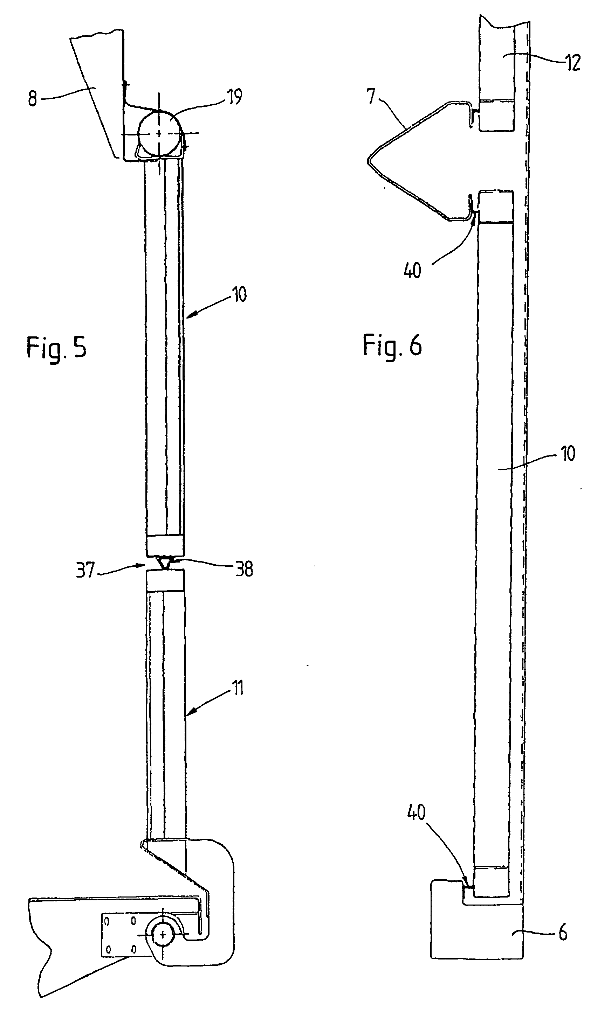

Fig. 5 und 6 der Zeichnung verdeutlichen, daß der Laderaum des mit Klapptüren ausgestatteten Eisenbahnwaggons vollständig durch Dichtungen, insbesondere gegen Wasser und Feuchtigkeit, abgedichtet ist. Hierzu ist jede Stoßfuge 37 zwischen zwei korrespondierenden Klapptüren, also beispielsweise der oberen Klapptür 10 und der unteren Klapptür 11, durch einen Dichtwulst 38 verschlossen, der als Hohlprofil aus elastischem Dichtungsmaterial wie Gummi oder Kunststoff hergestellt ist und an der oberen Klapptür 10 befestigt ist. Ferner ist die Anlenkung der oberen Klapptür mit der Schwenkwelle 19 durch eine flexible Abdeckung 39 in Form einer Plane gegen äußere Einflüsse abgedichtet, die einerseits am oberen Längsträger 8 und andererseits an der Klapptür 10 selbst oder ihrer Schwenkwelle 19 oder deren Lagerung befestigt ist. Zusätzlich sind sämtliche Klapptüren seitlich durch Dichtleisten gegen äußere Einflüsse abgedichtet. Diese sind der Fig. 6 der Zeichnung am Beispiel der Türen 10 und 12 entnehmbar. Es ist ersichtlich, daß seitlich in senkrechter Erstreckungsrichtung zwischen den Klapptüren 10 und 12 und den angrenzenden Flächen der Stirnwände 6 sowie Seitenwandpfosten 7 Dichtleisten 40 angeordnet sind, die als im Querschnitt L-förmige Metall-Gummi-Verbundelemente ausgebildet sind.

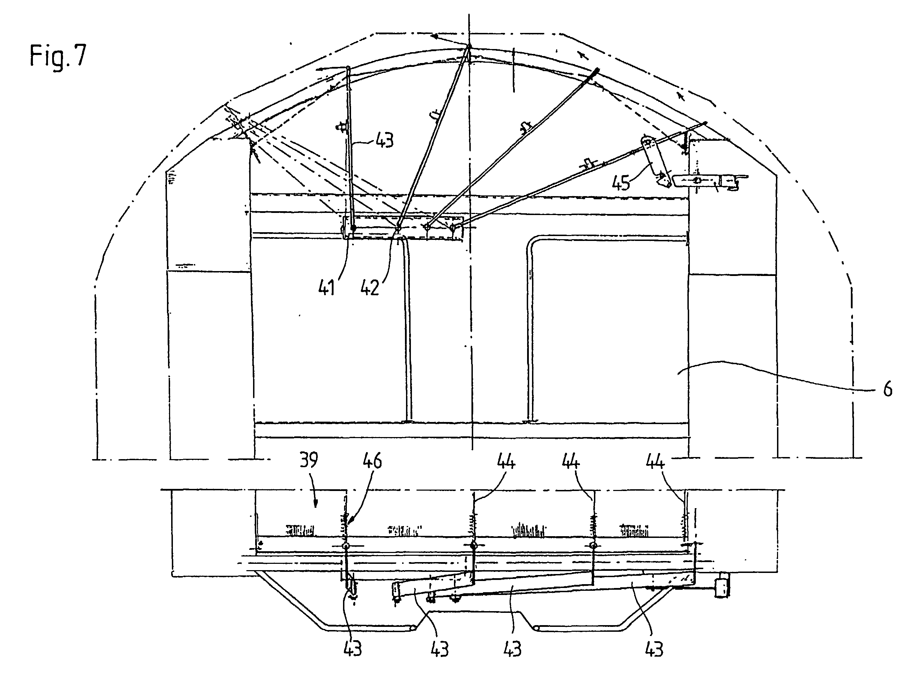

Der Aufbau 5 des Güterzugswagens 1 kann gemäß Fig. 7 der Zeichnung mit einer als Schwenkabdeckung ausgebildeten Dachbedeckung in Form eines Netzes versehen sein, so daß sich eine vollständige Öffnung des Güterzugwagens durch eine einfache manuelle Betätigung des Schwenkdaches vornehmen läßt. Hierzu ist an jeder Stirnseitenwand 6 im oberen Bereich eine Blechverstärkung 41 angeschweißt, so daß Schwenklager 42 für vier Schwenkarme 43 an den Stirnseitenwänden 6 verankert werden können. Die freien Enden der Schwenkarme 43 jeder Stirnseitenwand 6 sind paarweise miteinander über Stahlseile 44 miteinander verbunden, die ein Traggerüst für das Netz 45 darstellen. Die Stahlseile 44 sind zur Erhaltung und Einstellung ihrer Spannung durch Federn 46 belastet.

In dem in Fig. 7 dargestellten aufgeklappten Zustand der Schwenkarme 43 schließt die netzförmige Abdeckung den Waggon, wobei eine Sicherungseinrichtung 45 auf beiden Stirnseitenwänden 6 dafür sorgt, daß ein unbeabsichtigtes Öffnen unmöglich ist. Nach Öffnen der Sicherungseinrichtung 45 von Hand kann die Dachbedeckung in einfacher Weise nach links in Fig. 7 der Zeichnung geklappt werden, wie durch die strichpunktierten Linien symbolisiert ist und kann das Dach auf diese Weise in vollem Umfange geöffnet werden.

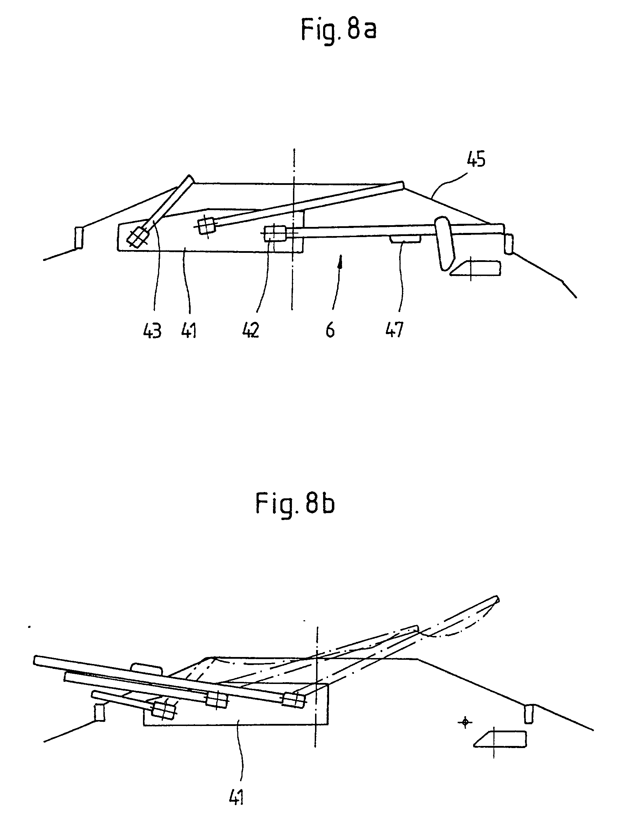

In der gleichen Weise ist prinzipiell die in Fig. 8 dargestellte Ausführungsform eines Schwenkdachs konstruiert, wobei im Sinne einer Vereinfachung an jeder Stirnseitenwand 6 nur noch drei Schwenkarme 43 Verwendung finden. Bei dieser Ausführungsform ist zur Erleichterung des Auf- und Zuklappens ein Griff 47 am in der Zeichnung rechten Schwenkarm eingezeichnet. Fig. 8a verdeutlicht dabei den Schließzustand und Fig. 8 den Öffnungszustand der Abdeckung, die als Netz oder Plane ausgebildet sein kann.

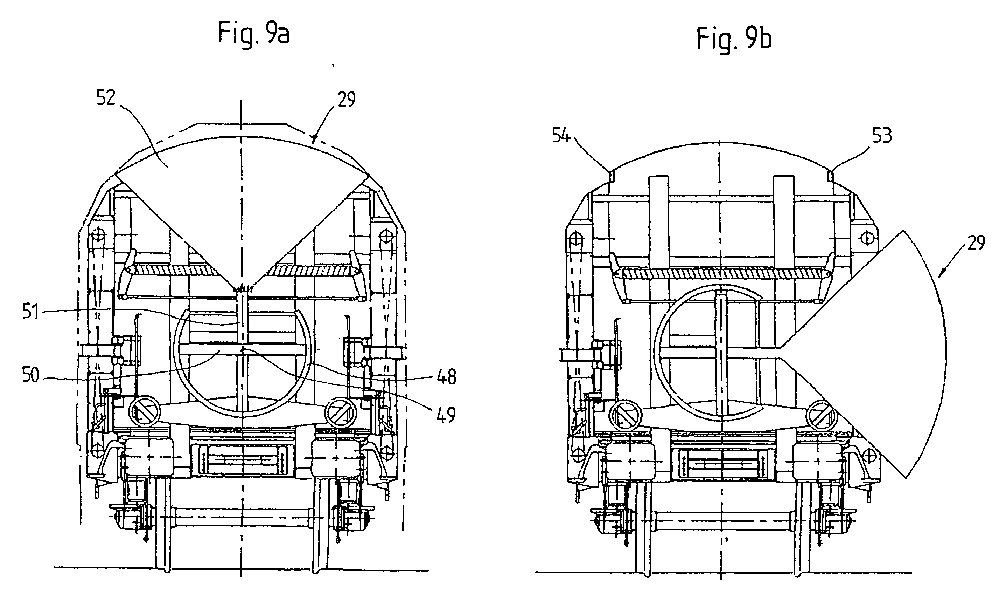

Eine weitere Abwandlung eines Schwenkdachs ist Fig. 9 der Zeichnung zu entnehmen. Hierbei ist an jeder Stirnseitenwand 6 im wesentlichen zentrisch eine Schwenkbetätigung in Form eines Rades 48 befestigt, das um eine Schwenkachse 49 von Hand aus der in Fig. 9a dargestellten Schließstellung in die in Fig. 9b dargestellte Öffnungsstellung gedreht werden kann. Jedes Rad 48 weist ein Radkreuz 49 auf, dessen im Schließzustand senkrecht nach oben weisender Schenkel 51 ein Kreissegmentelement 52 aus Blech trägt, das im wesentlichen dreiecksförmig ist und in der äußeren Kontur der Dachform angepaßt ist. Die zwei Kreissegmente 52 des Waggons tragen eine feste Dachbedeckung, die im einzelnen nicht dargestellt ist, die aber vorzugsweise aus einem leichten Wabenstrukturmaterial besteht, welches die gesamte obere Wagenöffnung abdeckt. Im Schließzustand liegt die Dachbedeckung an in Längsrichtung verlaufenden Dichtleisten 53, 54 an, so daß der Laderaum insgesamt, d. h. sowohl über die Klapptüren als auch dachseitig in vollem Umfange gegenüber dem Aufbau abgedichtet ist und sich quasi hermetisch gegenüber der Außenwelt, insbesondere wasserdicht, abschließen läßt. Zur Öffnung wird das Schwenkdach 29 gemäß Fig. 9b vollständig nach rechts auf die Seite des Waggons mit den Betätigungsrädern 48 verschwenkt.

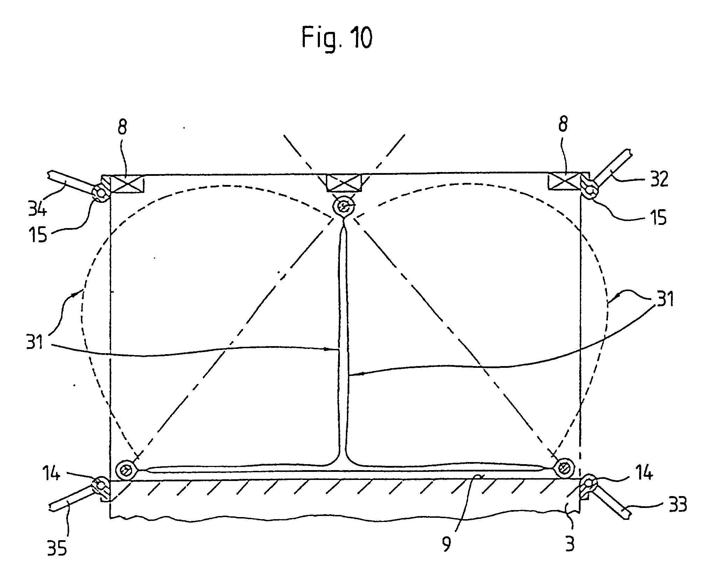

Ferner kann gemäß dem in Fig. 10 der Zeichnung dargestellten Ausführungsbeispiel der Güterzugwagen mit einem Airbag 31 als Entladeeinrichtung versehen sein. Dieser besteht aus einem dichten Beutel oder Balg aus geeignetem Leinen, der gemäß der ausgezogenen Linie eine Decke bildet, die in Lade-Position auf der gesamten Fläche des Bodens 9 des Fahrzeugs aufliegt und die sich vertikal gemäß der mittleren Längsachse des Fahrzeugs gegenüber den durch die Klappen 32, 33 bzw. 34, 35 verschließbaren seitlichen Entladeöffnungen über die gesamte Höhe erstreckt, so daß sich eine Art Trennwand bildet, die den Laderaum in zwei Abteilungen unterteilt, welche die Produkte in loser Schüttung, beispielsweise Holzspäne, aufnehmen. Wenn der Airbag 31 mit Luft gefüllt wird, nimmt er die mit der gestrichelten Linie verdeutlichte Form ein, womit der Beutel den Rauminhalt des Fahrzeugladeraums ausfüllt und die Transportmaterialien seitlich nach Öffnen der Klappen 32, 33, 34, 35 durch die so gebildete Entladeöffnung über die Abschlußkante des Bodens 9 nach außen hinausgedrückt werden.

### Bezugszeichenliste:

- 1: Güterzugwagen
- 2: Laufwerk
- 3: Untergestell
- 4: Puffer
- 5: Aufbau
- 6: Stirnseitenwand
- 7: Seitenwandpfosten
- 8: obere Längsträger
- 9: Aufbau-Boden
- 10: obere Klapptür
- 11: untere Klapptür
- 12: obere Klapptür
- 13: untere Klapptür
- 14: Achse
- 15: Achse
- 16: Mittenhalterung
- 17: Kette
- 18: Kette
- 19: Schwenkwellen
- 20: Schwenkwellen
- 21: Schwenkwellen
- 22: Schwenkwellen
- 23: Schwenkriegel
- 24: Schieberiegel
- 25: Befestigungskonsole
- 26: Kettenrad
- 27: Kettenrad
- 28: Kette
- 29: Schwenkdach
- 30: Dichtung
- 31: Airbag
- 32: Klappe
- 33: Klappe
- 34: Klappe
- 35: Klappe
- 36: Anschlag
- 37: Stoßfuge
- 38: Dichtwulst
- 39: Abdeckung
- 40: Dichtleiste
- 41: Blechverstärkung
- 42: Schwenklager
- 43: Schwenkarm
- 44: Stahlseile
- 45: Sicherungseinrichtung
- 46: Federn
- 47: Griff
- 48: Rad
- 49: Schwenkachse
- 50: Radkranz
- 51: Schenkel
- 52: Kreissegment
- 53: Dichtleiste
- 54: Dichtleiste

## Patentansprüche

1. Güterzugwagen (1) mit einem Laufwerk (2), einem Untergestell (3) und damit verbundenem kastenförmigen Aufbau (5) aus einem Rahmenwerk mit Stirnseitenwänden (6), Seitenwandpfosten (7) und diese verbindenden oberen Längsträgem (8), wobei die Stirnseiten geschlossen sind und eine oder beide Seitenwände eine schließbare Öffnung zum Be- und/oder Entladen aufweisen, wobei die Öffnung sich über den gesamten Seitenwandbereich erstreckt und von wenigstens zwei korrespondierenden durchgehend zu öffnenden Klapptüren (10, 11 bzw. 12, 13 bzw. 32, 33 bzw. 34, 35) verschlossen ist,
**dadurch gekennzeichnet,**
**daß** die eine, die untere Hälfte des Seitenwandbereichs einnehmende Klapptür (11 bzw. 13; 33 bzw. 35) um eine untere Schwenkachse (14) am Untergestell (3) und die andere, die obere Hälfte des Seitenwandbereichs in gleicher Vertikalebene einnehmende Klapptür (10 bzw. 12; 32 bzw. 34) um eine obere Schwenkachse (15) im Bereich des oberen Längsträgers (8) schwenkbar angelenkt ist, daß die untere Klapptür (11 bzw. 13; 33 bzw. 35) eine geringere Höhe und ein geringeres Gewicht als die obere Klapptür (10 bzw. 12; 32, bzw. 34) besitzt und daß als Kopplungseinrichtung zumindest an einer der beiden Seiten der Klapptüren eine 8-förmig gelegte Kette (28) als Kettentrieb vorgesehen ist, die mit den Schwenkwellen (19 bzw. 20 bzw. 21 bzw. 22) der Klapptüren über daran befestigte Kettenräder (26 bzw. 27) verbunden ist.

2. Güterzugwagen nach Anspruch 1, **dadurch gekennzeichnet, daß** die Klapptüren (10, 11 bzw. 12, 13 bzw. 32, 33 bzw. 34, 35) in Schließstellung durch eine manuell lösbare Verriegelung (23) als Sicherheitseinrichtung arretiert sind.

3. Güterzugwagen nach Anspruch 1 oder Anspruch 2, **dadurch gekennzeichnet, daß** die Klapptüren (10, 11 bzw. 12, 13 bzw. 32, 33 bzw. 34, 35) beidseitig durch je eine manuell lösbare Verriegelung (23 und 24) als Sicherheitseinrichtung arretiert sind.

4. Güterzugwagen nach einem der Ansprüche 1 bis 3, **dadurch gekennzeichnet, daß** die Klapptüren (10, 11 bzw. 12, 13 bzw. 32, 33 bzw. 34, 35) mittig durch eine Mittenhalterung (16) zusätzlich gehalten sind.

5. Güterzugwagen nach einem der Ansprüche 1 bis 4, **dadurch gekennzeichnet, daß** die untere Klapptür (11 bzw. 13; 33 bzw. 35) unterhalb des Bodens (9) des Aufbaus (5) angelenkt ist.

6. Güterzugwagen nach einem der Ansprüche 1 bis 5, **dadurch gekennzeichnet, daß** die obere Klapptür (10 bzw. 12; 32 bzw. 34) durch einen Anschlag (36) in Öffnungsstellung in im wesentlichen senkrechter Position gehalten ist.

7. Güterzugwagen nach einem der Ansprüche 1 bis 6, **dadurch gekennzeichnet, daß** die Klapptüren (10, 11 bzw. 12, 13 bzw. 32, 33 bzw. 34, 35) gegeneinander und gegenüber angrenzenden Teilen des Aufbaus (5) mit Dichtungen (30) abgedichtet sind.

8. Güterzugwagen nach Anspruch 7, **dadurch gekennzeichnet, daß** in der Stoßfuge (37) zwischen zwei korrespondierenden Klapptüren (10, 11 bzw. 12, 13 bzw. 32, 33 bzw. 34, 35) ein insbesondere aus einem Hohlprofil bestehender, sich horizontal erstreckender Dichtwulst (38) jeweils über die gesamte Länge angeordnet und an einer der Klapptüren befestigt ist, daß seitlich in senkrechter Erstreckungsrichtung an den Klapptüren (10, 11, 12, 13, 32, 33, 34, 35) und/oder am Rahmenwerk Dichtleisten (40) befestigt sind, die in geschlossenem Zustand die Klapptüren gegenüber dem Rahmenwerk abdichten.

9. Güterzugwagen nach Anspruch 8, **dadurch gekennzeichnet, daß** die Dichtleisten (40) L-förmig sind und aus Metall/Gummi-Verbundmaterial bestehen.

10. Güterzugwagen nach einem der Ansprüche 7 bis 9, **dadurch gekennzeichnet, daß** die Anlenkung der oberen Klapptür (10 bzw. 12 bzw. 32 bzw. 34) durch eine flexible Abdeckung (39) abgedichtet ist, die einerseits am Rahmenwerk, insbesondere am oberen Längsträger (8) und andererseits an der Klapptür (10 bzw. 12 bzw. 32 bzw. 34) oder deren Schwenkwelle befestigt ist.

11. Güterzugwagen nach einem der Ansprüche 1 bis 10, **dadurch gekennzeichnet, daß** eine Abdeckung des Aufbaus (5) durch ein Netz, eine Dachplane oder eine feste Dachbedeckung vorgesehen ist, die als Schwenkabdeckung (29) ausgebildet ist.

12. Güterzugwagen nach Anspruch 11, **dadurch gekennzeichnet, daß** an jeder Stirnwandseite (6) eine Halterung (41, 42, 43 bzw. 48, 49, 50, 51, 52) zu einer Seite schwenkbar befestigt ist, die gemeinsam die Dachbedeckung tragen.

13. Güterzugwagen nach Anspruch 11 oder 12 für eine Netz-Dachplanen- oder dergleichen flexible Abdeckung, **dadurch gekennzeichnet, daß** an jeder Stimseitenwand (6) eine Halterung (41, 42, 43) mit mindestens drei zueinander beabstandeten Schwenkarmen (43) befestigt ist, über die die flexible Abdeckung gespannt ist, wobei eine Längsseite der flexiblen Abdeckung an oder nahe dem oberen Längsträger (8) am Aufbau (5) und die andere Längsseite an dem Schwenkarm (43) befestigt ist, der in geschlossenem Zustand an oder nahe dem gegenüberliegenden Längsträger (8) des Aufbaus liegt.

14. Güterzugwagen nach Anspruch 13, **dadurch gekennzeichnet, daß** die Schwenkarme (43) beider Stimseitenwände (6) an ihren freien Enden durch Längsspannseile (44) paarweise miteinander verbunden sind.

15. Güterzugwagen nach Anspruch 14, **dadurch gekennzeichnet, daß** die flexible Abdeckung zusätzlich an den Spannseilen (44) befestigt ist.

16. Güterzugwagen nach einem der Ansprüche 12 bis 15, **gekennzeichnet durch** eine Sicherungseinrichtung (45) gegen Verschwenken, die im Schließzustand der Abdeckung wirksam ist.

17. Güterzugwagen nach einem der Ansprüche 12 bis 16, **dadurch gekennzeichnet, daß** die Schwenkarme (43) außerhalb der Wagenmitte im wesentlichen in einer waagerechten Ebene mit Abstand zueinander an der Stirnseitenwand (6) angelenkt sind.

18. Güterzugwagen nach Anspruch 11 oder 12, **dadurch gekennzeichnet, daß** die Halterung (48, 49, 50, 51, 52) aus einem Kreissegmentelement (52) besteht, das an oder nahe seiner Spitze an der Stimseitenwand (6) zu einer Seite schwenkbar in der Mittelachse des Güterzugwagens befestigt und mit einer Schwenkbetätigung (48) versehen ist.

19. Güterzugwagen nach Anspruch 18, **dadurch gekennzeichnet, daß** die Schwenkbetätigung aus einem Handrad (48) mit einem Radkreuz (50) besteht, dessen im Schließzustand senkrecht nach oben gerichteter Schenkel mit der Spitze des Kreissegment-Elements (52) verbunden ist, wobei die beiden Kreissegment-Elemente (52) des Güterzugwagens eine Dachbedeckung aus Wabenstruktur-Verbundmaterial tragen.

20. Güterzugwagen nach einem der Ansprüche 1 bis 19, **dadurch gekennzeichnet, daß** als Entladeeinrichtung ein Airbag (31) vorgesehen ist, der aus einer auf dem Boden (9) des Aufbaus (5) aufliegenden aufblasbaren Unterlage in Form eines dichten Beutels oder Balgs besteht, der in aufgeblasenem Zustand den Rauminhalt des Laderaums einnimmt.

21. Güterzugwagen nach Anspruch 20, **dadurch gekennzeichnet, daß** der Beutel oder Balg in luftleerem Zustand den Boden (9) bedeckt und eine im wesentlichen über die gesamte Höhe des Aufbaus (5) sich erstreckende Wand gegenüber der Entladeöffnung bildet.

22. Güterzugwagen nach einem der Ansprüche 1 bis 21, **dadurch gekennzeichnet, daß** beide Längsseitenwände mit durchgehend zu öffnenden Klapptüren (10, 11 bzw. 12, 13 bzw. 32, 33 bzw. 34, 35) versehen sind.

23. Güterzugwagen nach einem der Ansprüche 1 bis 22 **dadurch gekennzeichnet, daß** auf halber Länge eine Unterteilung vorgesehen ist und insgesamt vier Klapptüren (10, 11, 12, 13) auf einer oder beiden Längswandseiten jeweils angeordnet sind.

## Claims

1. Goods train carriage (1) with running gear (2), a subframe (3) and a box-like superstructure (5) connected thereto consisting of a framework with end walls (6), side-wall posts (7) and upper longitudinal members (8) connecting the latter, wherein the end faces are closed and one or both side walls comprise a closable opening for loading and/or unloading, wherein the opening extends over the whole side-wall region and is closed by at least two corresponding flap doors (10, 11 or 12, 13 or 32, 33 or 34, 35) to be opened fully,
**characterised in that** one flap door (11 or 13; 33 or 35) which occupies the lower half of the side-wall region is linked to the subframe (3) so as to be pivotable about a lower pivot axis (14) and the other flap door (10 or 12; 32 or 34) which occupies the upper half of the side-wall region in the same vertical plane is linked so as to be pivotable about an upper pivot axis (15) in the region of the upper longitudinal member (8), **in that** the lower flap door (11 or 13; 33 or 35) has a lower height and a lower weight than the upper flap door (10 or 12; 32 or 34) and **in that** as the coupling device on at least one of the two sides of the flap doors there is provided a chain (28) laid in a figure of eight as a chain drive which is connected to the pivot shafts (19 or 20 or 21 or 22) of the flap doors via sprockets (26 or 27) attached thereto.

2. Goods train carriage according to claim 1, **characterised in that** the flap doors (10, 11 or 12, 13 or 32, 33 or 34, 35) are locked in the closed position by a manually releasable locking system (23) as a safety device.

3. Goods train carriage according to claim 1 or claim 2, **characterised in that** the flap doors (10, 11 or 12, 13 or 32, 33 or 34, 35) are locked on both sides in each case by a manually releasable locking system (23 and 24) as a safety device.

4. Goods train carriage according to any of claims 1 to 3, **characterised in that** the flap doors (10, 11 or 12, 13 or 32, 33 or 34, 35) are additionally held centrally by a centre support (16).

5. Goods train carriage according to any of claims 1 to 4, **characterised in that** the lower flap door (11 or 13; 33 or 35) is linked below the floor (9) of the superstructure (5).

6. Goods train carriage according to any of claims 1 to 5, **characterised in that** the upper flap door (10 or 12; 32 or 34) is held by a stop (36) in the open position in an essentially vertical position.

7. Goods train carriage according to any of claims 1 to 6, **characterised in that** the flap doors (10, 11 or 12, 13 or 32, 33 or 34, 35) are sealed off from each other and from adjoining parts of the superstructure (5) with seals (30).

8. Goods train carriage according to claim 7, **characterised in that** in the junction gap (37) between two corresponding flap doors (10, 11 or 12, 13 or 32, 33 or 34, 35) a horizontally extending sealing bead (38) in particular consisting of a hollow profile is arranged in each case over the whole length and attached to one of the flap doors, **in that** laterally in the vertical direction of extent attached to the flap doors (10, 11, 12, 13, 32, 33, 34, 35) and/or to the framework are sealing strips (40) which in the closed state seal off the flap doors from the framework.

9. Goods train carriage according to claim 8, **characterised in that** the sealing strips (40) are L-shaped and made of metal/rubber composite material.

10. Goods train carriage according to any of claims 7 to 9, **characterised in that** the linkage of the upper flap door (10 or 12 or 32 or 34) is sealed off by a flexible cover (39) which is attached on the one hand to the framework, in particular to the upper longitudinal member (8), and on the other hand to the flap door (10 or 12 or 32 or 34) or the pivot shaft thereof.

11. Goods train carriage according to any of claims 1 to 10, **characterised in that** a cover for the superstructure (5) is provided by a net, a roof tarpaulin or a fixed roof sheet which is designed as a pivotable cover (29).

12. Goods train carriage according to claim 11, **characterised in that** attached to each end wall (6) is a support (41, 42, 43 or 48, 49, 50, 51, 52) so as to be pivotable to one side, which together carry the roof sheet.

13. Goods train carriage according to claim 11 or 12 for a net, roof tarpaulin or the like flexible cover, **characterised in that** attached to each end wall (6) is a support (41, 42, 43) with at least three spaced-apart pivot arms (43) by means of which the flexible cover is made taut, wherein one longitudinal side of the flexible cover is attached to the superstructure (5) on or near the upper longitudinal member (8) and the other longitudinal side is attached to the pivot arm (43) which in the closed state lies on or near the opposite longitudinal member (8) of the superstructure.

14. Goods train carriage according to claim 13, **characterised in that** the pivot arms (43) of the two end walls (6) are connected to each other in pairs at their free ends by longitudinal tensioning ropes (44).

15. Goods train carriage according to claim 14, **characterised in that** the flexible cover is additionally attached to the tensioning ropes (44).

16. Goods train carriage according to any of claims 12 to 15, **characterised by** an anti-pivot device (45) which is operative in the closed state of the cover.

17. Goods train carriage according to any of claims 12 to 16, **characterised in that** the pivot arms (43) are linked to the end wall (6) outside the carriage centre essentially in a horizontal plane at a distance from each other.

18. Goods train carriage according to claim 11 or 12, **characterised in that** the support (48, 49, 50, 51, 52) consists of a circle segment element (52) which is attached at or near its point to the end wall (6) in the centre axis of the goods train carriage so as to be pivotable to one side, and provided with a pivot actuation means (48).

19. Goods train carriage according to claim 18, **characterised in that** the pivot actuation means consists of a hand wheel (48) with a wheel cross (50) of which the arm directed vertically upwards in the closed state is connected to the point of the circle segment element (52), wherein the two circle segment elements (52) of the goods train carriage carry a roof sheet made of honeycomb-structure composite material.

20. Goods train carriage according to any of claims 1 to 19, **characterised in that** as an unloading device there is provided an airbag (31) which consists of an inflatable substrate resting on the floor (9) of the superstructure (5) in the form of a sealed bag or bellows which in the inflated state occupies the spatial content of the freight space.

21. Goods train carriage according to claim 20, **characterised in that** the bag or bellows in the evacuated state covers the floor (9) and forms a wall extending essentially over the full height of the superstructure (5) opposite the unloading opening.

22. Goods train carriage according to any of claims 1 to 21, **characterised in that** both longitudinal side walls are provided with flap doors (10, 11 or 12, 13 or 32, 33 or 34, 35) to be opened fully.

23. Goods train carriage according to any of claims 1 to 22, **characterised in that** halfway along is provided a partition, and in particular four flap doors (10, 11, 12, 13) are arranged in each case on one or both longitudinal wall sides.

## Revendications

1. Wagon de marchandises (1) comportant un mécanisme de roulement (2), un châssis (3) et une superstructure (5) en forme de caisson reliée à celui-ci et constituée par une ossature comportant des parois latérales frontales (6), des montants de paroi latérale (7) et des supports longitudinaux supérieurs (8) reliant ceux-ci, les faces frontales étant fermées et une ou deux parois latérales présentant un orifice susceptible d'être refermé pour le chargement et/ou le déchargement, l'orifice s'étendant sur la totalité de la zone de paroi latérale et étant refermé par au moins deux portes rabattables correspondantes (10, 11 ou 12, 13 ou 32, 33 ou 34, 35) à ouvrir en entier,
**caractérisé en ce que**
l'une des portes rabattables (11 ou 13; 33 ou 35) occupant la moitié inférieure de la zone de paroi latérale est articulée autour d'un axe de pivotement inférieur (14) sur le châssis (3) et l'autre porte rabattable (10 ou 12 ; 32 ou 34) occupant la moitié supérieure de la zone de paroi latérale dans le même plan vertical est articulée autour d'un axe de pivotement supérieur (15) dans la zone du support longitudinal supérieur (8), **en ce que** la porte rabattable inférieure (11 ou 13 ; 33 ou 35) présente une hauteur inférieure et un poids inférieur à la porte rabattable supérieure (10 ou 12 ; 32 ou 34), et **en ce qu'**une chaîne (28) posée en forme de 8 en tant qu'entraînement à chaîne est prévue à titre de dispositif d'accouplement sur l'un au moins des deux côtés des portes rabattables, chaîne qui est reliée aux arbres de pivotement (19 ou 20 ou 21 ou 22) des portes rabattables via des pignons à chaîne (26 ou 27) fixées sur celles-ci.

2. Wagon de marchandises selon la revendication 1, **caractérisé en ce que** les portes rabattables (10, 11 ou 12, 13 ou 32, 33 ou 34, 35) sont arrêtées en position de fermeture par un verrouillage (23) à libérer manuellement à titre de dispositif de sécurité.

3. Wagon de marchandises selon l'une ou l'autre des revendications 1 et 2, **caractérisé en ce que** les portes rabattables (10, 11 ou 12, 13 ou 32, 33 ou 34, 35) sont arrêtées des deux côtés chacune par un verrouillage (23 ou 24) à libérer manuellement à titre de dispositif de sécurité.

4. Wagon de marchandises selon l'une des revendications 1 à 3, **caractérisé en ce que** les portes rabattables (10, 11 ou 12, 13 ou 32, 33 ou 34, 35) sont retenues au milieu en supplément par une monture médiane (16).

5. Wagon de marchandises selon l'une des revendications 1 à 4, **caractérisé en ce que** la porte rabattable inférieure (11 ou 13 ; 33 ou 35) est articulée au-dessous du plancher (9) de la superstructure (5).

6. Wagon de marchandises selon l'une des revendications 1 à 5, **caractérisé en ce que** la porte rabattable supérieure (10 ou 12 ; 32 ou 34) est maintenue en position de fermeture dans une situation sensiblement verticale par une butée (36).

7. Wagon de marchandises selon l'une des revendications 1 à 6, **caractérisé en ce que** les portes rabattables (10, 11 ou 12, 13 ou 32, 33 ou 34, 35) sont étanchées l'une par rapport à l'autre et par rapport à des pièces adjacentes de la superstructure (5) par des joints d'étanchéité (30).

8. Wagon de marchandises selon la revendication 7, **caractérisé en ce que** dans l'intervalle de jointure (37) entre deux portes rabattables correspondantes (10, 11 ou 12, 13 ou 32, 33 ou 34, 35), un bourrelet d'étanchement (38) constitué en particulier par un profilé creux et s'étendant horizontalement est agencé sur toute la longueur respective et fixé sur l'une des portes rabattables, **en ce que** des baguettes d'étanchéité (40) sont fixées latéralement en direction d'extension verticale sur les portes rabattables (10, 11, 12, 13, 32, 33, 34, 35) et/ou sur l'ossature, qui étanchent les portes rabattables par rapport à l'ossature dans l'état fermé.

9. Wagon de marchandises selon la revendication 8, **caractérisé en ce que** les baguettes d'étanchéité (40) sont en forme de L et sont constituées d'un matériau composite métal/caoutchouc.

10. Wagon de marchandises selon l'une des revendications 7 à 9, **caractérisé en ce que** l'articulation de la porte rabattable supérieure (10 ou 12 ou 32 ou 34) est étanchée par un recouvrement flexible (39) qui est fixé d'une part sur l'ossature, en particulier sur le support longitudinal supérieur (8), et d'autre part sur la porte rabattable (10 ou 12 ou 32 ou 34) ou sur son arbre de pivotement.

11. Wagon de marchandises selon l'une des revendications 1 à 10, **caractérisé en ce qu'**un recouvrement de la superstructure (5) est réalisé par un filet, par une bâche de toiture ou par un recouvrement de toiture solide qui est réalisé sous forme de recouvrement pivotant (29).

12. Wagon de marchandises selon la revendication 11, **caractérisé en ce qu'**une monture (41, 42, 43 ou 48, 49, 50, 51, 52) est fixée de façon mobile en pivotement vers un côté sur chaque face de paroi frontale (6), lesdites montures portant conjointement le recouvrement de toiture.

13. Wagon de marchandises selon l'une ou l'autre des revendications 11 et 12 pour un recouvrement flexible à filet, à bâche de toiture ou analogue, **caractérisé en ce qu'**une monture (41, 42, 43) comportant au moins trois bras de pivotement (43) écartés les uns des autres est fixée sur chaque paroi de face frontale (6), via lesquels le recouvrement flexible est tendu, un côté longitudinal du recouvrement flexible étant fixé sur ou à proximité du support longitudinal supérieur (8) sur la superstructure (5) et l'autre côté longitudinal étant fixé sur le bras de pivotement (43) qui, dans l'état fermé, se situe sur ou à proximité du support longitudinal opposé (8) de la superstructure.

14. Wagon de marchandises selon la revendication 13, **caractérisé en ce que** les bras de pivotement (43) des deux parois de face frontale (6) sont reliées par paire l'une à l'autre à leurs extrémités libres par des câbles tendeurs longitudinaux (44).

15. Wagon de marchandises selon la revendication 14, **caractérisé en ce que** le recouvrement flexible est fixé en supplément sur les câbles tendeurs (44).

16. Wagon de marchandises selon l'une des revendications 12 à 15, **caractérisé par** un dispositif de blocage anti-pivotement (45) qui est actif dans l'état fermé du recouvrement.

17. Wagon de marchandises selon l'une des revendications 12 à 16, **caractérisé en ce que** les bras de pivotement (43) sont articulés à distance mutuelle sur la paroi de face frontale (6) à l'extérieur du milieu du wagon sensiblement dans un plan horizontal.

18. Wagon de marchandises selon l'une ou l'autre des revendications 11 et 12, **caractérisé en ce que** la monture (48, 49, 50, 51, 52) est constituée par un élément en segment de cercle (52) qui est fixé sur ou à proximité de son sommet sur la paroi de face frontale (6) en pouvant pivoter vers un côté dans l'axe médian du Wagon de marchandises et qui est pourvu d'un dispositif d'actionnement de pivotement (48).

19. Wagon de marchandises selon la revendication 18, **caractérisé en ce que** le dispositif d'actionnement de pivotement est constitué par une roue à main (48) comportant une croix de roue (50) dont le bras dirigé verticalement vers le haut dans l'état fermé est relié au sommet de l'élément en segment de cercle (52), les deux éléments en segment de cercle (52) du Wagon de marchandises portant un recouvrement de toiture en matériau composite à structure en nids d'abeilles.

20. Wagon de marchandises selon l'une des revendications 1 à 19, **caractérisé en ce qu'**il est prévu à titre de dispositif de déchargement un airbag (31) qui est constitué par un support sous forme de sac ou de soufflet étanche gonflable reposant sur le plancher (9) de la superstructure (5), airbag qui, dans l'état gonflé, occupe le volume de l'espace à charger.

21. Wagon de marchandises selon la revendication 20, **caractérisé en ce que** dans l'état dégonflé le sac ou le soufflet recouvre le plancher (9) et forme à l'opposé de l'orifice de déchargement une paroi qui s'étend sensiblement sur toute la hauteur de la superstructure (5).

22. Wagon de marchandises selon l'une des revendications 1 à 21, **caractérisé en ce que** les deux parois latérales longitudinales sont pourvues de portes rabattables (10, 11 ou 12, 13 ou 32, 33 ou 34, 35) à ouvrir en entier.

23. Wagon de marchandises selon l'une des revendications 1 à 22, **caractérisé en ce qu'**il est prévu une subdivision à mi-longueur, et au total quatre portes rabattables (10, 11, 12, 13) sont agencées sur un côté ou sur les deux côtés respectifs de la paroi longitudinale.
